# EUROPEAN PATENT APPLICATION

(11) **EP 3 795 526 A1**
(43) Date of publication of application: **24.03.2021**
(21) Application number: 19197906.1
(22) Date of filing: 18.09.2019
(51) Int. Cl.: B66B 9/02, B66B 11/04

(54) **DEVICE, ELEVATOR, AND METHOD FOR MOVING AN ELEVATOR CAR OF AN ELEVATOR**

(71) Applicant: KONE Corporation, 00330 Helsinki (FI)
(72) Inventor: HUOTARI, Tommi, 00330 HELSINKI (FI); KOIVISTO, Ari, 00330 HELSINKI (FI); HÄNNINEN, Ari, 00330 HELSINKI (FI); PURANEN, Mikko, 00330 HELSINKI (FI); NOUSU, Hannu, 00330 HELSINKI (FI); TYNI, Tapio, 00330 HELSINKI (FI)
(74) Representative: Berggren Oy, Helsinki & Oulu

(57) **Abstract**

A device (50) for an elevator (100), an elevator (100), and a method for moving an elevator car (10) are presented. The device (50) comprises a linear mover (52) comprising a winding, wherein the linear mover (52) is adapted to establish an electromagnetic engagement by the winding with a linear stator of a first stator beam (16). The device (50) further comprises an electrical energy storage unit (55), such as comprising at least one battery, and an electrical converter unit (53) arranged to supply electrical current from the electrical energy storage unit (55) to the winding for moving the device (50) along the first stator beam (16). The at least one linear mover (52), the electrical energy storage (55), and the electrical converter unit (53) are integrated into a body (56) of the device (50), and the device (50) is adapted for attaching removably to an elevator car (10) of the elevator (100) and, optionally, to a further device (50) of the elevator (100).

## Description

### FIELD OF THE INVENTION

The present invention relates in general to elevators. In particular, however not exclusively, the present invention concerns devices, elevators, and methods for moving an elevator car of an elevator, wherein the elevator utilizes an electric linear motor for moving the elevator car or cars thereof.

### BACKGROUND

There are known elevators with electric linear motors. In these elevators, the mover of the electric linear motor has been coupled to the elevator car so that the elevator car can be moved by the motor. The mover is also in electromagnetic coupling with a linear stator or stator beam of the motor.

One drawback in the known elevators is that the mover is an integral part of the elevator car and, thus, the elevator car cannot be easily detached from the stator beam. Furthermore, once the mover or movers have been designed and coupled for moving a particular elevator car, the properties of the elevator car with respect to moving it cannot be easily modified. Therefore, there is still a need to develop solutions for moving the elevator cars.

### SUMMARY

An objective of the present invention is to provide a device, an elevator, and a method for moving an elevator car of an elevator. Another objective of the present invention is that the device, the elevator, and the method facilitate modifying the properties of the elevator at least with respect to moving the elevator car or cars.

The objectives of the invention are reached by a device, an elevator, and a method as defined by the respective independent claims.

According to a first aspect, a device for an elevator is provided. The device comprises at least one linear mover comprising a winding, wherein the linear mover is adapted to establish an electromagnetic engagement by the winding with at least one linear stator of a first stator beam of the elevator for moving the device along the first stator beam. The device further comprises an electrical energy storage unit, such as comprising at least one battery. Still further, the device comprises an electrical converter unit arranged to supply electrical current from the electrical energy storage unit to the winding for moving the device along the first stator beam. The at least one linear mover, the electrical energy storage, and the electrical converter unit are integrated into a body of the device. The device is adapted for attaching removably to an elevator car of the elevator or to a further device, that is similar or identical, however, separate with respect to said device, of the elevator.

In various embodiments, the device may comprise at least one second linear mover comprising a second winding, wherein the second linear mover is adapted to establish an electromagnetic engagement by the second winding with at least one second linear stator of a second stator beam of the elevator for moving the device along the second stator beam.

In some embodiments, the at least one linear mover and the second linear mover may be adapted to move along stators of different stator beams of the elevator.

Alternatively or in addition, the device may comprise a cooling arrangement, such as liquid cooling arrangement or a common heat sink, for providing cooling to the at least one linear mover and the electrical converter unit, and, optionally, to the at least one second linear mover.

In various embodiments, the electrical converter unit may comprise a plurality of electrical converters, such as inverters, for supplying electrical current to the winding or the windings or the second winding or the second windings.

In various embodiments, the device may comprise attachment means for attaching the device removably to the elevator car and/or to the further device.

In some embodiments, the device may comprise electrical connection means, such as by a galvanic, a capacitive, or an inductive connection, for providing electrical power to the elevator car.

Still further the device may preferably comprise a controlling unit for controlling the movement of the device along the stator beam or beams.

According to a second aspect, an elevator is provided. The elevator comprises at least one device according to the first aspect or any embodiment thereof. The elevator comprises at least one elevator car, at least one stator beam comprising at least one linear stator, wherein the linear mover of the device is adapted to establish the electromagnetic engagement by the winding with the at least one linear stator for moving the device along the stator beam, thereby moving also the elevator car when the device is attached to the elevator car.

In various embodiments, the elevator comprises at least two of said devices, wherein a plurality of the at least two of said devices are arranged to move one elevator car.

According to a third aspect, a method for moving an elevator car of an elevator is provided. The method comprises:
- arranging a mover in electromagnetic engagement by a winding thereof with a linear stator of a stator beam of the elevator,
- removably attaching the mover to the elevator car, and
- moving the elevator car by moving the mover.

In various embodiments, the method may comprise arranging further mover by the winding thereof with a linear stator of a stator beam of the elevator, and removably attaching the further mover to the elevator car, such as on an opposite side of the elevator car relative to the mover; and moving the elevator car by the mover and the further mover.

In some embodiments, the method may further comprise removably attaching the further mover to the mover, and moving the elevator car by the combination of the mover and the further mover.

In various embodiments, the mover is comprised in at least one device according to the first aspect, or any embodiment thereof. The method may then further comprise removably attaching the device to the elevator car, and moving the elevator car by moving the device.

In addition, the further mover may be comprised in further device according to the first aspect, or any embodiment thereof. Then, the method may comprise removably attaching the further device to the elevator car, such as on an opposite side of the elevator car relative to said device, or to the device, and moving the elevator car by said device and the further device.

The present invention provides a device, an elevator, and a method for moving an elevator car of an elevator. The present invention provides advantages over known solutions in that it enables moving heavier loads than with known attempts since the maximum load can be multiplied by attaching more devices to the elevator car and, optionally, to each other. Also, higher speeds can be achieved when needed. The present invention will thus improve elevator performance and capacity.

Various other advantages will become clear to a skilled person based on the following detailed description.

The expression "a number of" may herein refer to any positive integer starting from one (1), that is, being at least one.

The expression "a plurality of" may refer to any positive integer starting from two (2), that is, being at least two.

The terms "first", "second" and "third" are herein used to distinguish one element from other element, and not to specially prioritize or order them, if not otherwise explicitly stated.

The exemplary embodiments of the present invention presented herein are not to be interpreted to pose limitations to the applicability of the appended claims. The verb "to comprise" is used herein as an open limitation that does not exclude the existence of also unrecited features. The features recited in depending claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

Some embodiments of the invention are illustrated by way of example, and not by way of limitation, in the figures of the accompanying drawings.
Figure 1 illustrates schematically an elevator according to an embodiment of the present invention.
Figures 2A and 2B illustrate schematically devices according to some embodiments of the present invention.
Figures 3A and 3B illustrate schematically devices according to some embodiments of the present invention.
Figure 4 illustrates a flow diagram of a method according to an embodiment of the present invention.
Figure 5 illustrates a flow diagram of a method according to an embodiment of the present invention.

### DETAILED DESCRIPTION OF SOME EMBODIMENTS

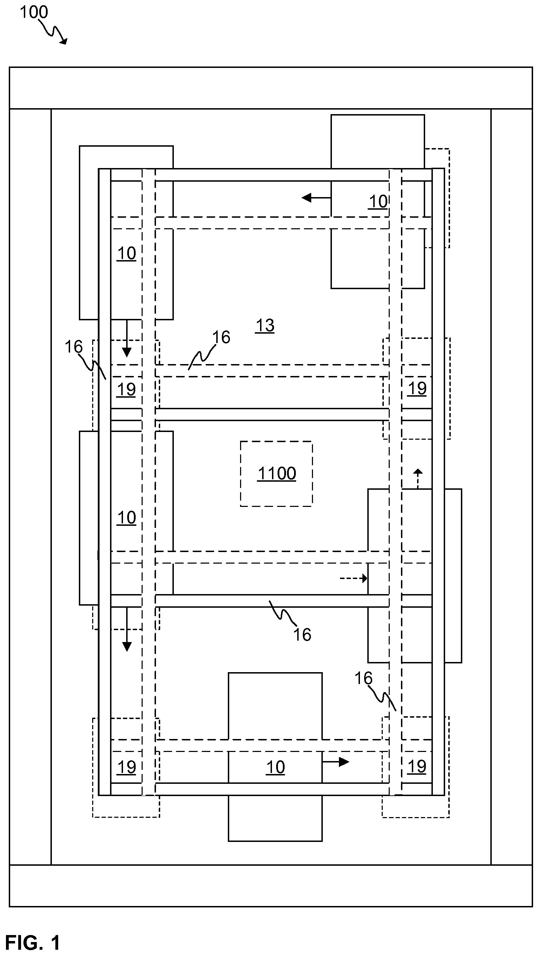

Figure 1 illustrates schematically an elevator 100 according to an embodiment of the present invention. The elevator 100 may comprise at least one or a plurality of elevator cars 10 moving in the elevator shaft 13 or the elevator car pathway 13.

There are preferably at least two landing floors, having landing floor doors 19 or openings 19, comprised in the elevator 100. There may also be doors comprised in the elevator car 10. Although shown in Fig. 1 that there are two horizontally separated sets, or "columns", of vertically aligned landing floors, there could as well be only one column as in conventional elevators or more than two, for example, three.

Regarding the elevator shaft 13, it may be such as defining substantially closed volume in which the elevator car 10 is adapted and configured to be moved. The walls may be, for example, of concrete, metal or at least partly of glass, or any combination thereof. The elevator shaft 13 herein refers basically to any structure or pathway along which the elevator car 10 is configured to be moved.

As can be seen in Fig. 1 with respect to the multi-car elevator 100, the elevator car 10 or cars 10 may be moved along the elevator shaft 13 vertically and/or horizontally depending on the direction of stator beams 16. According to embodiments similar to one in Fig. 1 in this respect, the elevator car 10 or cars 10 may be configured to be moved along a number of vertical 16 and/or horizontal 16 stator beams, for example, two beams such as in Fig. 1. The stator beams 16 are part of an electric linear motor of the elevator 100 utilized to move the elevator car 10 or cars 10 in the elevator shaft 13. The stator beams 16 may, preferably, be arranged in fixed manner, that is, stationary with respect to the elevator shaft 13, for example, to a wall of the shaft by fastening portions, which may be arranged to rotatable at direction changing positions of the elevator car 10.

In various embodiments, the elevator 100 may comprise at least one device (not shown in Fig. 1) for moving the elevator car 10 or cars 10 thereof. The device may comprise at least one linear mover comprising a winding. The linear mover is, preferably, adapted to establish an electromagnetic engagement by the winding with at least one linear stator of a first stator beam 16 of the elevator 100 for moving the device along the first stator beam 16. The device may also comprise an electrical energy storage unit, such as comprising at least one battery, for providing electrical power to move and operate the device. Furthermore, the device may comprise an electrical converter unit arranged to supply electrical current from the electrical energy storage unit to the winding for moving the device along the first stator beam 16. The at least one linear mover, the electrical energy storage, and the electrical converter unit may, preferably, integrated into a body of the device, that is, essentially forming a single unit. Furthermore, the device may be adapted for attaching removably to an elevator car 10 of the elevator 100 and, optionally, to a further device, such as similar or identical to said device, of the elevator 100. Furthermore, in various embodiments, the device may comprise a controlling unit configured to control the operation of the device, for example particularly of the mover, such as related to moving of the device. The controlling unit may be connected to a sensor or sensors in the device. The sensors may provide information such as speed and/or position of the device. Furthermore, the controlling unit may be arranged in connection with an elevator control unit 1100.

In various embodiments, the devices may be arrange to move along vertical and/or horizontal stator beams 16, and/or be able also to change movement direction between two nonparallel directions.

The elevator 100 may comprise an elevator control unit 1100 for controlling the operation of the elevator 100, such as the device or devices. The elevator control unit 1100 may be a separate device or may be comprised in the other components of the elevator 100. The elevator control unit 1100 may also be implemented in a distributed manner so that, e.g., one portion of the elevator control unit 1100 may be comprised in the electrical converter unit and another portion in the elevator car 10 and/or in the elevator shaft 13. The elevator control unit 1100 may also be arranged in distributed manner at more than two locations or in more than two devices. Advantageously, the elevator control unit 1100 has been arranged to be in connection, such as in electrical connection and/or in data communication, with the device(s) and, optionally, elevator car(s) 10.

The elevator control unit 1100 may comprise one or more processors, one or more memories being volatile or non-volatile for storing portions of computer program code and any data values and possibly one or more user interface units. The mentioned elements may be communicatively coupled to each other with e.g. an internal bus.

The processor of the elevator control unit 1100 may at least be configured to perform various tasks related to the operation of the elevator 100. The implementation of such tasks may be achieved by arranging the processor to execute at least some portion of computer program code stored in the memory causing the processor, and thus the elevator control unit 1100, to implement one or more the tasks. The processor may thus be arranged to access the memory and retrieve and store any information therefrom and thereto. For sake of clarity, the processor herein refers to any unit suitable for processing information and control the operation of the elevator control unit 1100, among other tasks. The operations may also be implemented with a microcontroller solution with embedded software. Similarly, the memory is not limited to a certain type of memory only, but any memory type suitable for storing the described pieces of information may be applied in the context of the present invention.

The device(s) may comprise an electrical converter unit, such as a frequency converter or an inverter, and/or an electrical energy storage unit such as a battery or batteries. The electrical converter unit may be utilized for operating a mover arranged to device which is further arranged to be removably attached to an elevator car 10 for moving the car 10 along the elevator shaft 13.

In various embodiments, the device 50, and the components and elements thereof, may be integrated into a single unit. The device may, thus, comprise a common cooling arrangement, such as a common heat sink, for the mover and the electrical converter unit. Still further, the common cooling arrangement may also be arranged to provide cooling for one or several inverters arranged to the device, such as to the body thereof. The advantage of having the components integrated into a single unit is that the converters of the electrical converter unit may be arranged close to the windings of the mover, thus, making the structure simple and efficient, and having less conductors therein for establishing electrical connections.

In an embodiment, the device may comprise several inverters for operating different movers. Thus, the inverters may be distributed to different portions of the device, such as close to the corresponding movers. The cooling of the inverters may, however, be arranged commonly, such as using the common cooling arrangement, e.g. the common heat sink.

In an embodiment, the device may comprise only one mover, however, in other embodiments there may be more than one movers, such as two, three, or four. The one or several of the movers of the device may be arranged to move along the same stator beam or along different stator beams.

In various embodiments, the device may be integrated to the sling of the elevator car 10 or it can be platform-like solution which can be attached to the top and/or bottom of the car 10 to move the car 10. The elevator car 10, that is essentially, however, not explicitly, the cage thereof into which the passengers enter, is thus easy to install to the device for moving the car 10 along the stator beam 16. Another advantage is that the elevator car 10 is easy to change into another elevator car 10 because the device has been removable coupled to the car 10.

There may also be other electrically operated equipment in the elevator car 10 such as lighting, doors, user interface, emergency rescue equipment, etc. These may be powered by the electrical energy storage unit of the device, that is when connected to the elevator car 10 and electrical connection (and optionally data communication connection) being provided therebetween, or by a dedicated electrical energy storage in the elevator car 10. Thus, the elevator car 10 may also comprise an electrical converter, such as an inverter or a DC/DC converter.

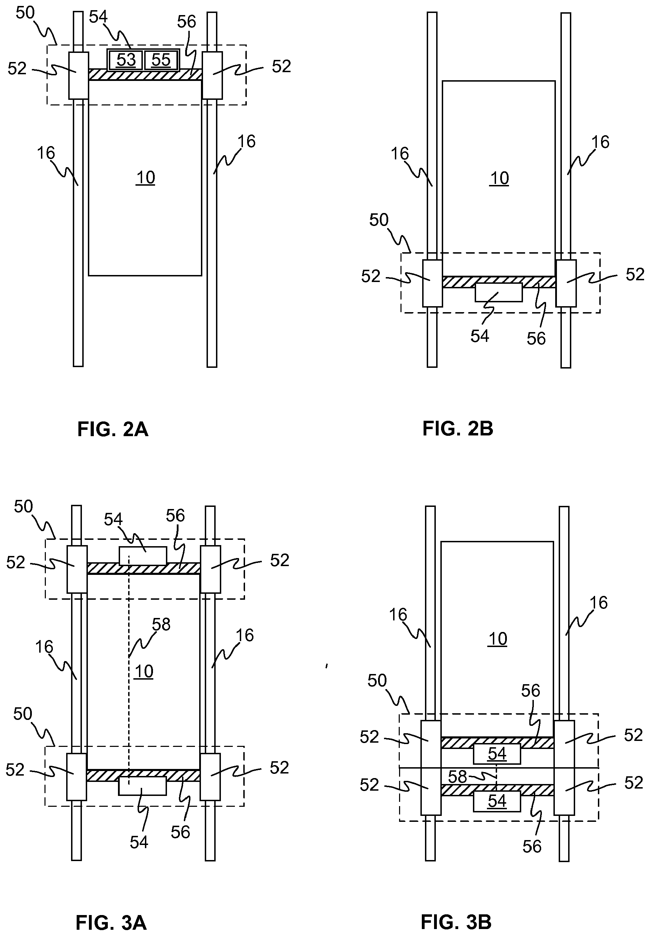

Figures 2A and 2B illustrate schematically devices 50 according to some embodiments of the present invention. The devices 50 may comprise two linear movers 52, each comprising a winding or windings (not shown). The linear movers 52 may be adapted to establish an electromagnetic engagement by the winding with at least one linear stator of a stator beam 16 of the elevator for moving the device 50 along the first stator beam 16. Furthermore, the device 50 may comprise an electrical energy storage unit 55, such as comprising at least one battery, and an electrical converter unit 53 arranged to supply electrical current from the electrical energy storage unit 55 to the winding for moving the device 50 along the first stator beam 16. In Figs. 2A and 2B, the electrical energy storage unit 55 and the electrical converter unit 53 may be comprised in the element marked with reference number 54. In Figs. 2A and 2B, the body 56 of the device 50 is shown. The body 56 or "sling" 56 may preferably be arranged between the two movers 52. The body 56 may further comprise attachment means for removable attach the elevator car 10 to the device 50. These may be specific mechanical fixing points for the device 50.

Figures 3A and 3B illustrate schematically devices 50 according to some embodiments of the present invention. Figs. 3A and 3B illustrate similar kind of devices 50 as Figs. 2A and 2B, however, in these embodiments, two devices 50 have been arranged to move one elevator car 10. In Fig. 3A, the devices 50 are coupled have been removably coupled to opposite sides of the elevator car 10. In Fig. 3B, one of the devices 50 has been removably coupled to the elevator car 10 while the other device 50 has been removably coupled to said one of the devices 50. By having a plurality of devices 50 being arranged to move one elevator car 10, enables moving heavier loads than with traditional solutions since the maximum load can be multiplied by attaching more devices to the elevator car and/or to each other. Also, higher speeds can be achieved when needed.

In case of a plurality of devices 50 being coupled to an elevator car 10, a communication connection 58, such as wireless connection or a wired or galvanic connection through physical connectors and, optionally, through the elevator car 10, may be established therebetween for co-operative control of said devices 50.

In various embodiments, the device 50 can be moved in the shaft 13 without any elevator car 10 being coupled to it. This enables moving the device 50 to a location where it is needed, such as to another elevator car 10. There may be also some devices 50 as a reserve in the shaft, for example in "a parking area", or a device 50 can be borrowed from one car 10 where it was originally attached to but not needed at a time. This provides more flexibility to the use of the elevator 100 since the devices 50 are independent of the elevator cars 10, that is the cages thereof.

In some embodiments, the parking area for reserve car(s) 10 and/or device(s) 50 may be arranged to be in an end of a vertical or a horizontal part of the elevator shaft 13.

Since the devices 50 can be detached and fitted to an elevator car 10, either on top of the car or to its bottom, the devices 50 can be moved in the elevator shaft 13 from a car 10 to another car 10 or then there may be separate reserve units which can be moved and fitted to a car 10 which needs a hoisting function or needs more power for additional capacity. The additional capacity may be required if some car 10 is used for moving heavy loads or when some car needs to run faster than normal.

The device 50 may be detached from a car top or car bottom and then it drives autonomously to attach to another car 10 which needs more power or which does not have such device 50 at all. The device 50 may run in the shaft 13, which has a plurality alternative routes from one point to another, via a route which suits it the best.

In various embodiments of the present invention, the hoisting function (that is basically the device 50) has been separated from the elevator car 10, i.e. attached to a sling 56 or the device 50 may be a lifting platform which is removably attached to the car roof, car bottom or both. Since the car 10 is then merely a passive element, at least with respect to moving it in the shaft 13, it may easily be installed and removed from the device 50. This enables a solution having a changeable elevator car 10 or cars 10.

The changeable elevator car 10 makes it easy to change the car 10 when it needs maintenance, for example, when new decorations or spare parts are to be installed to it. The also enables fast car 10 changes and personalized services for the passengers by providing different kind of cars as a service. The elevator 100 could also have special cars in stock e.g. for moving furniture and such or to provide personalized travel with individual cars, such as related to colors, decorations, seats, etc. Changing the whole car 10 is fast and therefore the uptime of the elevator 100 will be better compared to traditional method of changing the car 10 or its parts. In the known attempts, the elevator car 100 needs to be disassembled to be able to replace it or its parts. The disassembling takes time and the elevator 100 and the elevator shaft 13 are out of normal service for the disassembling and re-assembly time.

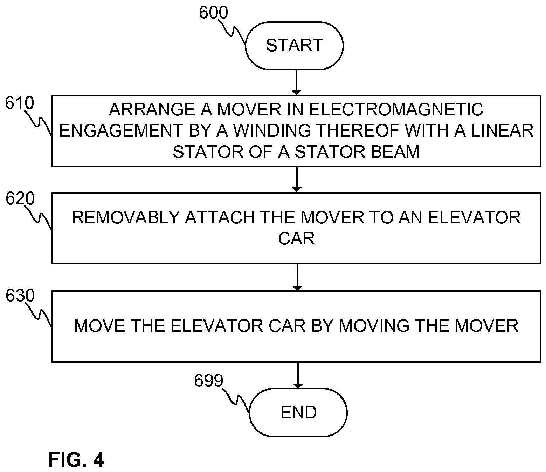

Figure 4 shows a flow diagram of a method in accordance with an embodiment of the present invention.

Step 600 refers to a start-up phase of the method. Suitable equipment and components are obtained and systems assembled and configured for operation.

Step 610 refers to arranging a mover 52 in electromagnetic engagement by a winding thereof with a linear stator of a stator beam 16 of the elevator 100.

In an embodiment, the method may comprise arranging a further mover 52 by the winding thereof with a linear stator of a stator beam 16, for example the same or different stator beam 16, of the elevator 100. The method may further comprise removably attaching the further mover 52 to the elevator car 10, such as on an opposite side of the elevator car 10 relative to the mover 52, that is the first mentioned mover 52. Still further, the method may comprise moving the elevator car 10 by the mover 52 and the further mover 52.

Alternatively or in addition, the method may comprise removably attaching the further mover 52 to the mover 52, and moving the elevator car 10 by the combination of the mover 52 and the further mover 52. Thus, one of the mover 52 and the further mover 52 may, preferably, be removably coupled to the elevator car 10.

Step 620 refers to removably attaching the mover 52 or movers 52 to the elevator car 10.

Step 630 refers to moving the elevator car 10 by moving the mover 52.

Method execution is ended at step 699. Operating the elevator 100 is no longer needed, for instance, or the elevator car 10 has reached its destination.

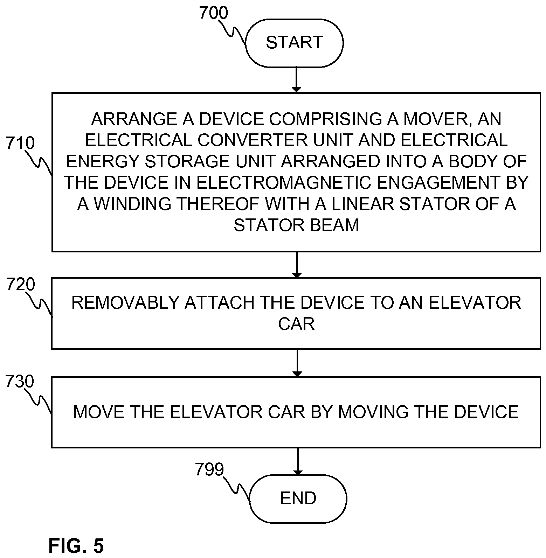

Figure 5 shows a flow diagram of a method in accordance with an embodiment of the present invention.

Step 700 refers to a start-up phase of the method. Suitable equipment and components are obtained and systems assembled and configured for operation. Step 710 refers to arranging a device 50, such as described hereinbefore for example with respect to Figs. 2A and 2B, in electromagnetic engagement by a winding thereof with a linear stator of a stator beam 16 of the elevator 100.

In an embodiment, the method may comprise arranging a further device 50 by the winding thereof with a linear stator of a stator beam 16, for example the same or different stator beam 16, of the elevator 100. The method may further comprise removably attaching the further device 50 to the elevator car 10, such as on an opposite side of the elevator car 10 relative to the device 50, that is the first mentioned device 50. Still further, the method may comprise moving the elevator car 10 by the device 50 and the further device 50.

Alternatively or in addition, the method may comprise removably attaching the further device 50 to the device 50, and moving the elevator car 10 by the combination of the device 50 and the further device 50. Thus, one of the device 50 and the further device 50 may, preferably, be removably coupled to the elevator car 10.

Step 720 refers to removably attaching the device 50 or devices 50 to the elevator car 10.

Step 730 refers to moving the elevator car 10 by moving the device 50 or devices 50.

Method execution is ended at step 799. Operating the elevator 100 or the device 50 is no longer needed, for instance, or the elevator car 10 has reached its destination, or the device 50 is needed elsewhere in the elevator shaft 13.

The specific examples provided in the description given above should not be construed as limiting the applicability and/or the interpretation of the appended claims. Lists and groups of examples provided in the description given above are not exhaustive unless otherwise explicitly stated.

## Claims

1. A device (50) for an elevator (100), **characterized in that** the device (50) comprises:
at least one linear mover (52) comprising a winding, wherein the linear mover (52) is adapted to establish an electromagnetic engagement by the winding with at least one linear stator of a first stator beam (16) of the elevator (100) for moving the device (50) along the first stator beam (16);
an electrical energy storage unit (55), such as comprising at least one battery;
an electrical converter unit (53) arranged to supply electrical current from the electrical energy storage unit (55) to the winding for moving the device (50) along the first stator beam (16);
wherein the at least one linear mover (52), the electrical energy storage (55), and the electrical converter unit (53) are integrated into a body (56) of the device (50); and
wherein the device (50) is adapted for attaching removably to an elevator car (10) of the elevator (100) and, optionally, to a further device (50) of the elevator (100).

2. The device (50) of claim 1, comprising at least one second linear mover (52) comprising a second winding, wherein the second linear mover (52) is adapted to establish an electromagnetic engagement by the second winding with at least one second linear stator of a second stator beam (16) of the elevator (100) for moving the device (50) along the second stator beam (16).

3. The device (50) of claim 2, wherein the at least one linear mover (52) and the second linear mover (52) are adapted to move along stators of different stator beams (16) of the elevator (100).

4. The device (50) of any one of the preceding claims, comprising a cooling arrangement, such as liquid cooling arrangement or a common heat sink, for providing cooling to the at least one linear mover (52) and the electrical converter unit (53), and, optionally, to the at least one second linear mover (52).

5. The device (50) of any one of the preceding claims, wherein the electrical converter unit (53) comprises a plurality of electrical converters, such as inverters, for supplying electrical current to the winding or the windings or the second winding or the second windings.

6. The device (50) of any one of the preceding claims, wherein the device (50) comprises attachment means for attaching the device (50) removably to the elevator car (10) or to the further device (50).

7. The device (50) of any one of the preceding claims, comprising electrical connection means, such as by a galvanic, a capacitive, or an inductive connection, for providing electrical power to the elevator car (10).

8. The device (50) of any one of the preceding claims, comprising a controlling unit for controlling the movement of the device (50) along the stator beam (16) or beams (16).

9. An elevator (100) **characterized in that** it comprises at least one device (50) according to any one of the preceding claims, wherein the elevator (100) comprises:
at least one elevator car (10);
at least one stator beam (16) comprising at least one linear stator;
wherein the linear mover (52) of the device (50) is adapted to establish the electromagnetic engagement by the winding with the at least one linear stator for moving the device along the stator beam (16), thereby moving also the elevator car (10) when the device (50) is attached to the elevator car (10).

10. The elevator (100) of claim 9, comprising at least two of said devices (50), wherein a plurality of the at least two of said devices (50) are arranged to move one elevator car (10).

11. A method for moving an elevator car (10) of an elevator (100), **characterized in that** the method comprises:
- arranging (610) a mover (52) in electromagnetic engagement by a winding thereof with a linear stator of a stator beam (16) of the elevator (100);
- removably attaching (620) the mover (52) to the elevator car (10); and
- moving (630) the elevator car (10) by moving the mover (52).

12. The method of claim 11, comprising:
- arranging further mover (52) by the winding thereof with a linear stator of a stator beam (16) of the elevator (100), and
- removably attaching the further mover (52) to the elevator car (10), such as on an opposite side of the elevator car (10) relative to the mover (52); and
- moving the elevator car (10) by the mover (52) and the further mover (52).

13. The method of claim 11, comprising:
- removably attaching the further mover (52) to the mover (52);
- moving the elevator car (10) by the combination of the mover (52) and the further mover (52).

14. The method of any one of claims 11-13, wherein the mover (52) is comprised in at least one device (50) according to any one of claims 1-8, the method comprising:
- removably attaching (720) the device (50) to the elevator car (10); and
- moving (730) the elevator car (10) by moving the device (50), such as by the at least one mover (52) thereof.

15. The method of claim 14, wherein the further mover (52) is comprised in further device (50) according to any one of claims 1-8, the method comprising:
- removably attaching the further device (50) to the elevator car (10), such as on an opposite side of the elevator car (10) relative to said device (50), or to the device (50); and
- moving the elevator car (10) by said device (50) and the further device (50).
